**Europäisches Patentamt**

**European Patent Office**

**Office européen des brevets**

(19)

(11) Veröffentlichungsnummer : **0 113 365**
**B1**

(12) **EUROPÄISCHE PATENTSCHRIFT**

(45) Veröffentlichungstag der Patentschrift :
28.05.86

(21) Anmeldenummer : **83902096.3**

(22) Anmeldetag : **08.07.83**

(86) Internationale Anmeldenummer :
**PCT/EP 83/00179**

(87) Internationale Veröffentlichungsnummer :
**WO/8400332 (02.02.84 Gazette 84/03)**

(51) Int. Cl.⁴ : **B 60 Q   1/06**

(54) SCHEINWERFER MIT VERSTELLBAREM REFLEKTOR FÜR KRAFTFAHRZEUGE.

(30) Priorität : **16.07.82 FR 8212512**

(43) Veröffentlichungstag der Anmeldung :
**18.07.84 Patentblatt 84/29**

(45) Bekanntmachung des Hinweises auf die Patenterteilung : **28.05.86 Patentblatt 86/22**

(84) Benannte Vertragsstaaten :
**DE GB**

(56) Entgegenhaltungen :
**DE-A- 3 028 700**

(73) Patentinhaber : **Signal Vision S.A.**
**32, rue de Paris St. Clement**
**F-89100 SENS (FR)**

(72) Erfinder : **KRIZMANIC, Jacky**
**26, rue Albert Camus**
**F-89100 Sens (FR)**

(74) Vertreter : **Patentanwaltsbüro Cohausz & Florack et al**
**Postfach 14 01 47**
**D-4000 Düsseldorf 1 (DE)**

**Beschreibung**

Die Erfindung betrifft einen Scheinwerfer für Kraftfahrzeuge mit einem äußeren Gehäuse, das vorne durch eine transparente Abdeckscheibe abgeschlossen ist, und mit einem im Gehäuse gelagerten Reflektor, der um eine horizontale und eine vertikale Achse verstellbar ist und außen eine Gelenkkugel trägt, die sich in einem mit dem Gehäuse verbundenen Lager dreht.

Bei bekannten Schweinwerfern dieser Art, wie der DE-A-30 28 700, nehmen die Bauteile zum Verstellen und Schwenken des Reflektors einen erheblichen Platz im Gehäuse, insbesondere am Umfang des Reflektors, ein. Dieser Raumbedarf vermindert die wirksame Beleuchtungsöffnung des Reflektors im Verhältnis zur verfügbaren Fläche der Abdeckscheibe und beeinträchtigt das formschöne Aussehen des Schweinwerfers, wenn er nicht in Betrieb ist.

Um diesen Nachteil zu beseitigen, ist schon vorgeschlagen worden, um den Rand des Reflektors an dem Gehäuse eine Zierleiste anzubringen, wodurch aber der Aufbau des Scheinwerfers kompliziert wird, ohne daß seine Leistung verbessert wird.

Der Erfindung liegt die Aufgabe zugrunde, einen verstellbaren Scheinwerfer zu schaffen, bei dem die Fläche der Abdeckscheibe maximal genutzt wird und die Verstelleinrichtungen nur einen geringen Raum einnehmen und von außen praktisch unsichtbar sind.

Erfindungsgemäß wird diese Aufgabe bei einem Scheinwerfer der eingangs genannten Art dadurch gelöst, daß am Reflektor auf der der Gelenkkugel gegenüberliegenden Seite eine Achse waagerecht vorsteht, um die der Reflektor drehbar ist und die in einem Teil, insbesondere in einem Schuh gelagert ist, das in etwa horizontaler Richtung verschieblich ist.

Bei einem solchen Scheinwerfer benötigt die Verstelleinrichtung besonders wenig Platz. Die Beleuchtungsöffnung kann optimal groß gewählt werden und der Scheinwerfer weist bei geringem Gewicht kleine Außenabmessungen auf. Ferner ist die Verstelleinrichtung wenig störungsanfällig.

Vorteilhafte Ausgestaltungen der Erfindung sind in den Unteransprüchen aufgeführt.

An Hand der Zeichnungen wird die Erfindung näher beschrieben. Es zeigen :

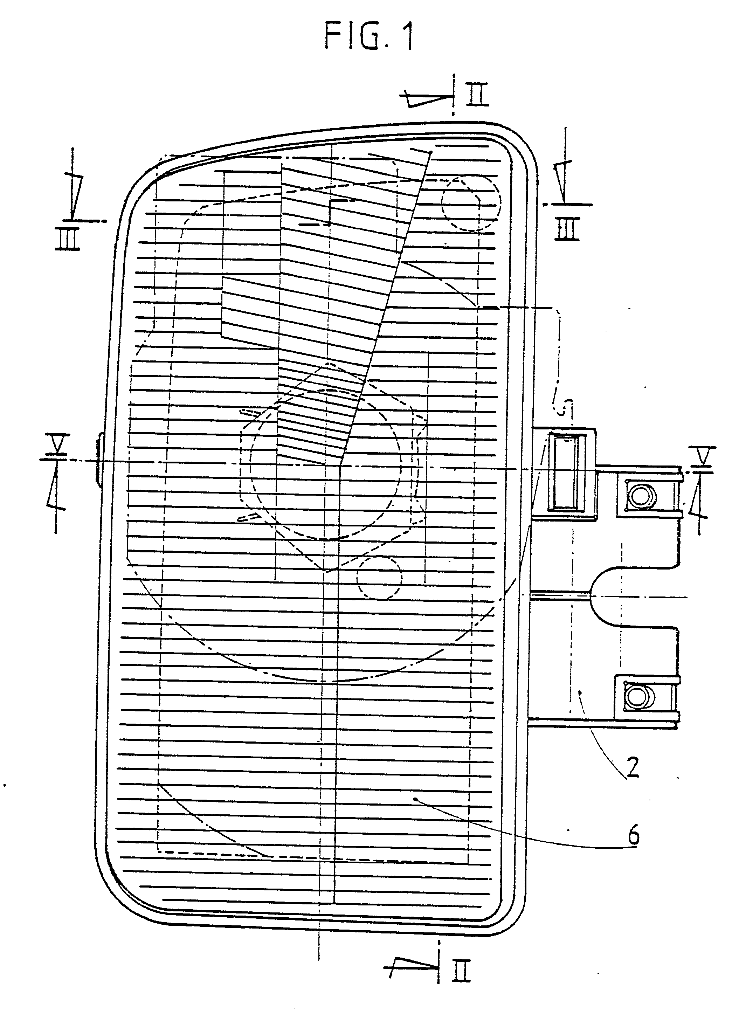

Figur 1 eine Vorderansicht eines Scheinwerfers gemäß einem Ausführungsbeispiel der Erfindung ;

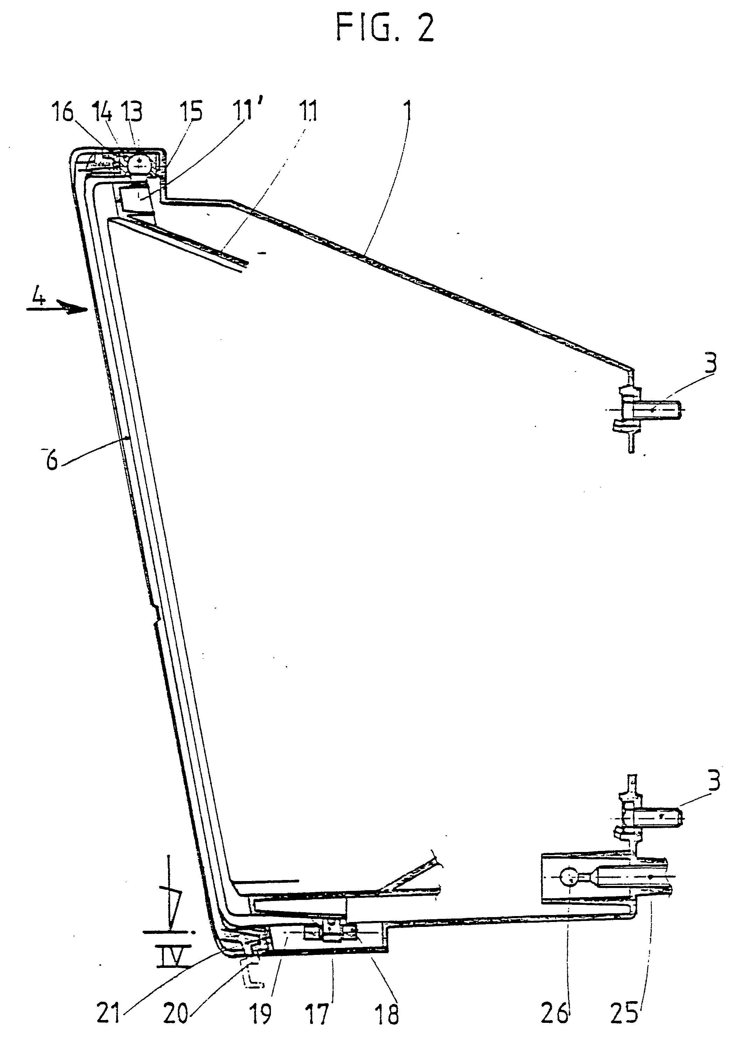

Figur 2 eine Schnittansicht längs der Linie II-II in Figur 1 ;

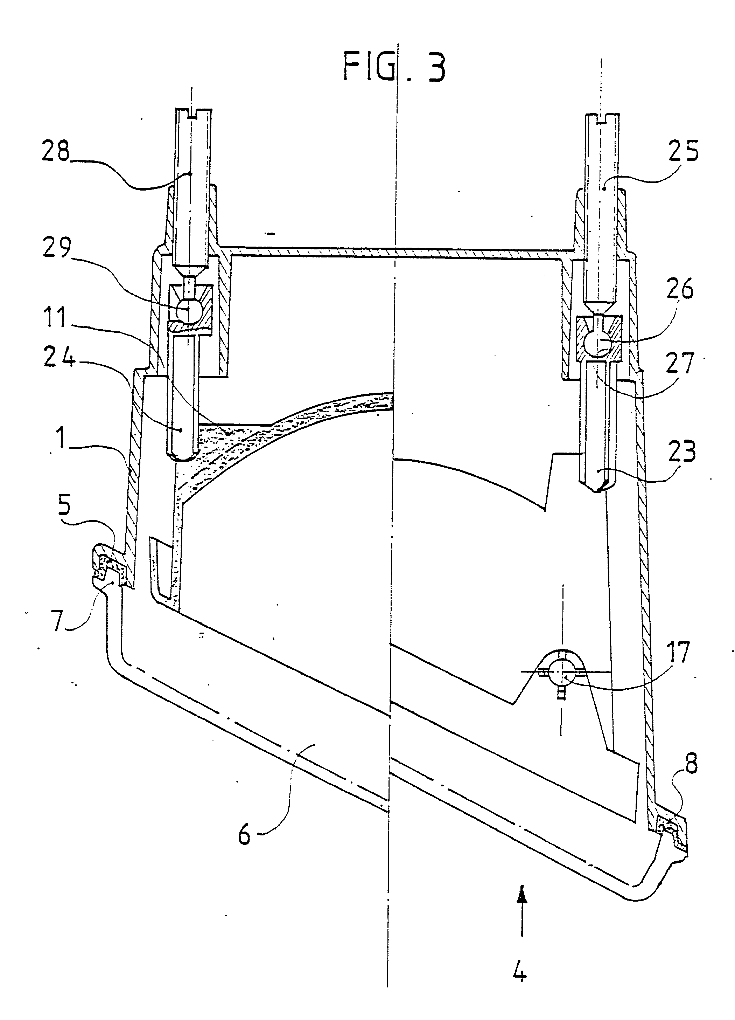

Figur 3 eine Schnittansicht längs der Linie III-III in Figur 1 ;

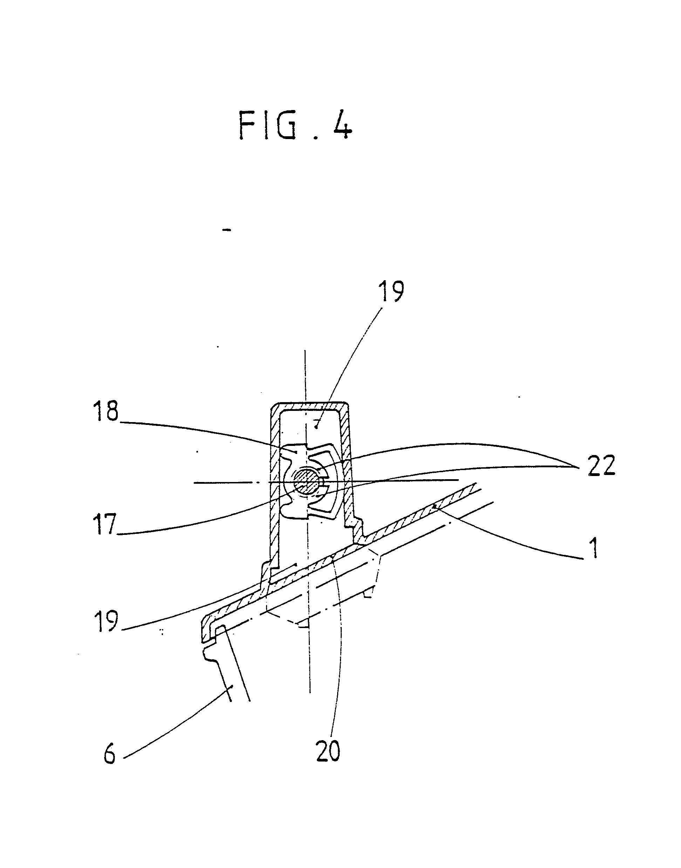

Figur 4 eine Schnittansicht längs der Linie IV in Figur 2 in vergrößertem Maßstab ; und

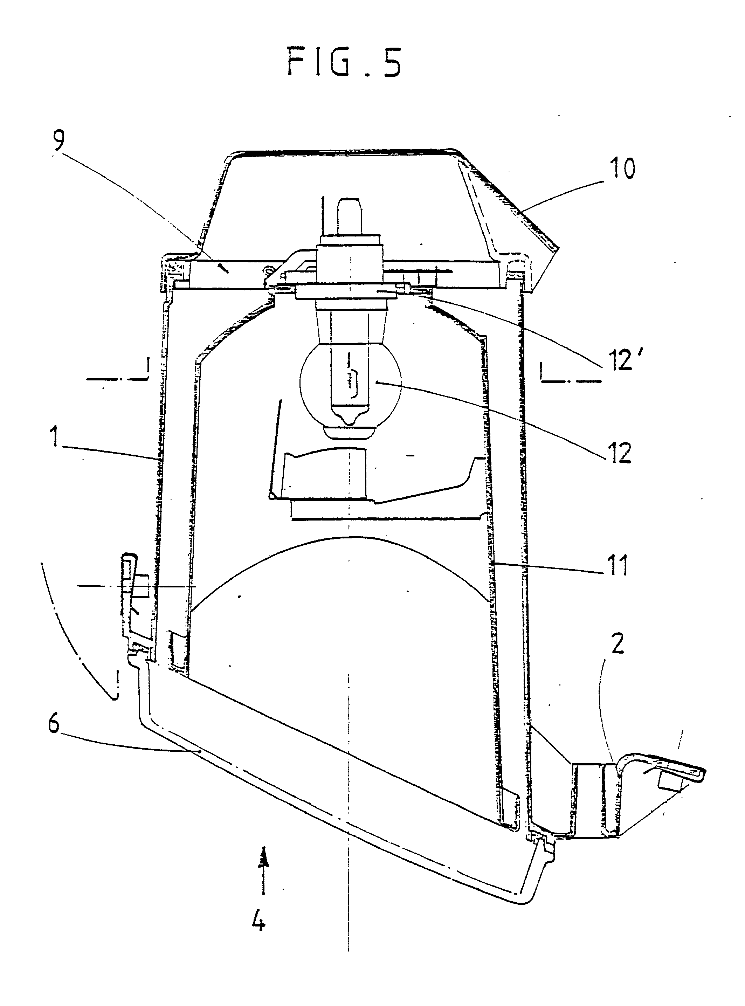

Figur 5 eine Schnittansicht längs der Linie IV-IV in Figur 1.

Der Scheinwerfer gemäß der Erfindung umfaßt ein Gehäuse 1, das durch ein vorderes Winkelstück 2 und durch rückwärtige Schrauben 3 mit der Karosserie (nicht dargestellt) verbunden ist. Das Gehäuse 1 weist eine vordere Öffnung 4 auf, die von einer Nut 5 eingefaßt ist. Die Öffnung 4 wird von einer Abdeckscheibe 6 abgeschlossen, an der sich eine Umfangsrippe 7 befindet, die in der Nut 5 mit Hilfe eines Klebers 8 befestigt ist. Das Gehäuse 1 weist außerdem eine rückwärtige Öffnung 9 auf, die durch einen Deckel 10 verschlossen ist. Ein Reflektor 11, der in einer Fassung 12' eine Glühlampe 12 trägt, ist in dem Gehäuse 1 so angeordnet, daß er horizontal und vertikal verstellt werden kann. Vorrichtungen dafür sind bekannt und brauchen daher hier nicht im einzelnen beschrieben zu werden.

Gemäß der Erfindung weist der Reflektor 11 an seinem Umfang einen im wesentlichen horizontalen Ansatz 11' auf, der nach außen gerichtet ist und in einer Gelenkkugel 13 endet. Die Gelenkkugel 13 dreht sich in einem Lager 14, das bei dem dargestellten Ausführungsbeispiel in einer seitlichen Ausbuchtung 15 des Gehäuses 1 untergebracht ist, die in den Boden der Nut 5 des Gehäuses mündet. Zu diesem Zweck ist das Lager 14 mit einer Nut 16 versehen, die die Kontinuität der Nut 5 gewährleistet.

Im wesentlichen in derselben horizontalen Ebene wie der Ansatz 11' trägt der Reflektor 11 gegenüber dem Ansatz 11' einen Achsenstumpf 17, der in einem Schuh 18 drehbar ist. Der Schuh 18 gleitet in einer Nut 19, die im wesentlichen horizontal in das Gehäuse 1 eingeformt und durch einen Deckel 20 verschlossen ist, der eine Nut 21 aufweist, die die Nut 5 verlängert. Der Schuh 18 umschließt die Achse 17 mit Hebeln 22, die eine gewisse Winkelbewegung der Achse 17 gestatten.

Der Reflektor 11 trägt an seiner Rückseite zwei Verstellstangen 23 und 24. Die Stange 23 ist im wesentlichen in derselben horizontalen Ebene angeordnet, die durch den Ansatz 11' und den Achsenstumpf 17 geht, und kann in Längsrichtung durch eine Stellschraube 25 verstellt werden, die mit einem in das Gehäuse 1 eingeformten Gewinde zusammenwirkt. Die Schraube 25 endet in einem Gelenkkopf 26, der mit einer Aussparung 27 in der Stange 23 zusammenwirkt. Die Schraube 25 übt auf den Schuh 18 eine Zug- oder Druckwirkung aus, wodurch der Reflektor 11 an der Gelenkkugel 13 um eine im wesentlichen vertikale Achse geschwenkt wird, so daß eine manuelle Korrektur der Scheinwerfereinstellung je nach der horizontalen Lage des Fahrzeugs vorgenommen werden kann. Die Gelenkkugel nimmt Achsverlagerungen zwischen Stange 23 und Schraube 25 auf.

Die Stange 24, die in einer von der Ebene der Stange 23 weit entfernten horizontalen Ebene angeordnet ist, wird ebenfalls von einer mit einer Gelenkkugel 29 versehenen Schraube 28 betätigt. Die Verstellung der Schraube 28 bewirkt eine Schwenkung des Reflektors 11 um eine im wesentlichen horizontale Achse, die durch die Achse 17 und die Mitte der Gelenkkugel 13 geht; dadurch kann die Einstellung des Reflektors in vertikaler Richtung korrigiert werden.

Selbstverständlich kann die Verstellung der Stangen 23 und/oder 24 durch mechanische, hydraulische oder elektrische Fernsteuerung oder von einer automatischen Stellvorrichtung vorgenommen werden.

**Patentansprüche**

1. Scheinwerfer für Kraftfahrzeuge mit einem äußeren Gehäuse (1), das vorne durch eine transparente Abdeckscheibe (6) abgeschlossen ist, und mit einem im Gehäuse gelagerten Reflektor (11), der um eine horizontale und eine vertikale Achse verstellbar ist und außen eine Gelenkkugel (13) trägt, die sich in einem mit dem Gehäuse verbundenen Lager (14) dreht, dadurch gekennzeichnet, daß am Reflektor (11) auf der der Gelenkkugel (13) gegenüberliegenden Seite eine Achse (17) waagerecht vorsteht, um die der Reflektor (11) drehbar ist und die in einem Teil, inbesondere in einem Schuh (18) gelagert ist, das in etwa horizontaler Richtung verschieblich ist.

2. Scheinwerfer nach Anspruch 1, dadurch gekennzeichnet, daß Lager (14) und Schuh (17) in Räumen (15, 19) untergebracht sind, die sich in Flucht hinter mindestens einer Nut-Rippe-Verbindung (5, 7) der Abdeckscheibe (6) an dem Gehäuse (1) befinden.

3. Scheinwerfer nach Anspruch 2, dadurch gekennzeichnet, daß der vordere Abschluß der Räume (15, 19) sowie die Kontinuität der Form der Verbindungsrandzone gleichzeitig durch das Ausfugen des Lagers (14) mit einem Endprofil (16) von der Art Nut und Rippe und den umgebogenen Rand mindestens eines Deckels (20) für einen Teilabschnitt der Nut-Rippe-Verbindung (5, 7) erfolgt der, mindestens den Unterbringungsraum (19) des Schuhs (18) verschließt.

4. Scheinwerfer nach einem der Ansprüche 1 bis 3, dadurch gekennzeichnet, daß die rückwärtige Fläche des Reflektors (11) eine Betätigungsstange (23), die in der genannten horizontalen Ebene liegt, und eine zweite Betätigungsstange (24), die in einer anderen horizontalen Ebene angeordnet ist, trägt und daß die Vorstellteile (25, 26-28, 29) im wesentlichen horizontal zu den Betätigungsstangen (23, 24) angeordnet sind.

5. Scheinwerfer nach einem der Ansprüche 1 bis 4, dadurch gekennzeichnet, daß das Lager (14) zwischen dem Rand des Gehäuses (1) und der Abdeckscheibe (6) angeordnet ist.

6. Scheinwerfer nach einem der Ansprüche 1 bis 5, dadurch gekennzeichnet, daß der Schuh (18) gleitbar in einer Nut (19) angeordnet ist, die in dem Gehäuse (1) eingeformt und an der Abdeckscheibe (6) durch einen Deckel (20) verschlossen ist.

7. Scheinwerfer nach einem der Ansprüche 1 bis 6, dadurch gekennzeichnet, daß die erste und/oder zweite Betätigungsstange (23, 24) durch eine Gelenkkugel (26, 29) mit einem Stellorgan (25, 28) verbunden ist (sind).

8. Scheinwerfer nach Anspruch 7, dadurch gekennzeichnet, daß das Stellorgan eine Schraube (25, 28) ist.

**Claims**

1. Headlamp for motor vehicles, comprising an outer housing (1) closed at the front by a transparent lens (6) and with, mounted in the housing, a reflector (11) adjustable about a horizontal and a vertical axis and carrying on the outside a joint ball (13) which turns in a mounting (14) connected to the housing, characterized in that there is projecting horizontally from the reflector (11), on the side opposite the joint ball (13), a spindle (17) about which the reflector (11) is rotatable and which is mounted in a part, particularly in a shoe (18), which is displaceable in a substantially horizontal direction.

2. Headlamp according to Claim 1, characterized in that bearing (14) and shoe (17) are accommodated in spaces (15, 19) provided flush on the housing (1) behind at least one tongue-and-groove connection (5, 7) of the lens (6).

3. Headlamp according to Claim 2, characterized in that the front closure of the spaces (15, 19) and the continuity of the shape of the marginal connecting zone are effected simultaneously by fitment into the mounting (14) of an end profile (16) after the fashion of a tongue-and-groove joint and the bent over edge of at least one cover (20) for a part of the tongue-and-groove joint (5, 7) which closes off at least the space (19) for accommodating the shoe (18).

4. Headlamp according to one of Claims 1 to 3, characterized in that the rear face of the reflector (11) carries an actuating rod (23) which lies in the said horizontal plane and a second actuating rod (24) disposed in another horizontal plane and in that the adjusting parts (25, 26 to 28, 29) are disposed substantially horizontally in relation to the actuating rods (23, 24).

5. Headlamp according to one of Claims 1 to 4, characterized in that the bearing (14) is located between the edge of the housing (1) and the lens (6).

6. Headlamp according to one of Claims 1 to 5, characterized in that the shoe (18) is disposed to slide in a groove (19) integrally shaped in the housing (1) and closed on the lens (6) by a cover (20).

7. Headlamp according to one of Claims 1 to 6, characterized in that the first and/or second actuating rod (23, 24) is connected by a joint ball (26, 29) to a positioning member (25, 28).

8. Headlamp according to Claim 7, characterized in that the positioning member is a screw (25, 28).

**Revendications**

1. Projecteur pour véhicule automobile avec un boîtier (1) extérieur qui est fermé par une glace (6) transparente et un réflecteur (11) logé dans le boîtier, qui est réglable autour d'un axe horizontal et d'un axe vertical et qui porte extérieurement une rotule (13) qui pivote dans un palier (14) solidaire du boîtier, caractérisé en ce qu'un axe (17) fait saillie du réflecteur (11) du côté opposé à la rotule (13) autour duquel le réflecteur (11) peut pivoter et qui est logé dans une pièce, en particulier un patin (18) monté coulissant sensiblement en direction horizontale.

2. Projecteur selon la revendication 1, caractérisé en ce que le palier (14) et le patin (18) pénètrent dans des logements (15, 19) réalisés dans l'alignement arrière d'au moins un ensemble rainure-nervure (5, 7) de la glace (6) sur le boîtier (1).

3. Projecteur selon la revendication 2, caractérisé en ce que la fermeture avant des logements (15, 19) et la continuité de la forme de la zone périphérique d'assemblage sont obtenues simultanément par le jointoiement du palier (14) avec le profil d'extrémité (16) du type rainure et nervure et le bord rabattu d'au moins un couvercle (20) d'un secteur de la liaison rainure-nervure (5, 7) qui obture au moins le logement (19) du patin (18).

4. Projecteur selon l'une des revendications 1 à 3, caractérisé en ce que la face arrière du réflecteur (11) porte une bielle de commande (23) qui est située sensiblement dans ledit plan horizontal ainsi qu'une seconde bielle de commande (24) située dans un plan horizontal différent, et que les organes (25, 26 — 28, 29) de déplacement sont disposés sensiblement horizontalement par rapport aux bielles de commande (23, 24).

5. Projecteur selon l'une des revendications 1 à 4, caractérisé en ce que le palier (14) est logé entre le bord du boîtier (1) et la glace (6).

6. Projecteur selon l'une des revendications 1 à 5, caractérisé en ce que le patin (18) est monté coulissant dans une rainure (19) qui est formée dans le boîtier (1) et fermée par un couvercle (20) vers la glace (6).

7. Projecteur selon l'une des revendications 1 à 6, caractérisé en ce que la première et/ou la seconde biellettes (23, 24) sont reliées à un organe de réglage (25, 28) par l'intermédiaire d'une rotule (26, 29).

8. Projecteur selon la revendication 7, caractérisé en ce que l'organe de réglage est une vis (25, 28).

# FIG. 1

1

# FIG. 2

# FIG. 3

# FIG . 4

19

18

22

17

1

19

6

20

# FIG.5